# EUROPÄISCHE PATENTANMELDUNG

(11) **EP 1 266 931 A1**
(43) Veröffentlichungstag der Anmeldung: **18.12.2002**
(21) Anmeldenummer: 02011681.0
(22) Anmeldetag: 03.06.2002
(51) Int. Cl.: C08K 5/50, C08L 69/00

(54) **Wärmeabsorbierende Polymer-Zusammensetzung**

(30) Priorität: 13.06.2001 DE 10128704
(71) Anmelder: BAYER AG, 51368 Leverkusen (DE)
(72) Erfinder: Döbler, Martin, Dr., 40593 Düsseldorf (DE); Ebert, Wolfgang, Dr., 47800 Krefeld (DE)

(57) **Zusammenfassung**

Eine Polymer-Zusammensetzung, die (a) einen transparenten thermoplastischen Kunststoff, (b) einen organischen Infrarotabsorber und (c) eine Phosphinverbindung enthält, zeichnet sich auch nach längerer thermischer Beanspruchung durch eine geringe Tendenz zum Vergilben, ausgedrückt durch eine geringe Veränderung des Yellowness Indexes, aus.

## Beschreibung

Die Erfindung betrifft eine wärmeabsorbierende Polymer-Zusammensetzung enthaltend einen transparenten thermoplastischen Kunststoff und einen organischen Infrarotabsorber sowie deren Herstellung, Verwendung und daraus hergestellte Erzeugnisse.

Verscheibungen aus Zusammensetzungen, enthaltend transparente thermoplastische Polymere wie z.B. Polycarbonat, bieten für den Automobilbereich und für Gebäude viele Vorteile gegenüber herkömmlichen Verscheibungen aus Glas wie z.B. erhöhte Bruchsicherheit oder Gewichtsersparnis. Im Fall von Automobilverscheibungen erreicht man dadurch eine höhere Insassensicherheit bei Verkehrsunfällen und durch die Gewichtsersparnis einen niedrigeren Kraftstoffverbrauch. Schließlich lassen transparente thermoplastische Polymere und Zusammensetzungen, die transparente thermoplastische Polymere enthalten, aufgrund der einfacheren Formbarkeit eine wesentlich größere Designfreiheit zu.

Allerdings führt die hohe Wärmedurchlässigkeit (d.h. Durchlässigkeit für IR-Strahlung) von transparenten thermoplastischen Polymeren bei Sonneneinwirkung zu einer unerwünschten Erwärmung im Inneren. Wie bei Parry Moon, Journal of the Franklin Institute 230, Seiten 583-618 (1940) beschrieben ist, entfällt der größte Teil der solaren Energie neben dem sichtbaren Bereich des Lichts zwischen 400 und 750 nm auf den Bereich des nahen Infrarots (NIR) zwischen 650 und 1100 nm. Eindringende Sonnenstrahlung wird z.B. im Inneren eines Automobils absorbiert und als langwellige Wärmestrahlung von 5 bis 15 µm emittiert. Da in diesem Bereich übliche Verscheibungsmaterialien und insbesondere transparente thermoplastische Polymere nicht transparent sind, kann die Wärmestrahlung nicht nach außen abstrahlen. Man erhält einen Treibhauseffekt. Um den Effekt möglichst klein zu halten, sollte die Transmission der Verscheibungen im NIR möglichst minimiert werden. Übliche transparente thermoplastische Polymere wie z.B. Polycarbonat sind jedoch sowohl im sichtbaren Bereich, als auch im NIR transparent. Es werden daher z.B. Zusätze benötigt, welche im NIR eine möglichst geringe Transparenz aufweisen bei weiterhin möglichst hoher Transparenz im sichtbaren Bereich des Spektrums.

In der Literatur sind für diesen Zweck Infrarotabsorber beschrieben, welche diese Erwärmung einschränken (z.B. J. Fabian, H. Nakazumi, H. Matsuoka, Chem. Rev. 92, 1197 (1992), US-A 5 712 332, JP-A 06240146). Es sind organische und anorganische Infrarotabsorber bekannt. Besonders geeignet für diesen Zweck sind organische Infrarotabsorber. Derartige Farbstoffe weisen Absorptionsmaxima im nahen Infrarot (NIR) auf.

Während der Einsatz von Infrarotabsorbern in Kunststoff-Verscheibungselementen zu einer effektiven Verringerung der Erwärmung im Innenraum führt, kommt es infolge der Wärmabsorption zu einer unerwünschten Erwärmung der Scheibe selbst. Bei andauernder Sonneneinstrahlung können hierbei sehr hohe Scheibentemperaturen erreicht werden, was sich nachteilig auf die Materialeigenschaften des Kunststoffes auswirken kann. Dies kann unter anderem zur Zersetzung des empfindlichen Infrarotabsorbers unter Ausbleichen und/oder Vergilben der Kunststoffscheibe führen. Nachteilig ist hierbei vor allem das Vergilben der Kunststoffscheibe, welches im Automobilbereich eine erhebliche Beeinträchtigung der Sicherheit bedeutet. Ein Maß für das Vergilben von Kunststoffscheiben ist der Yellowness Index ("Y.I.").

Es ist ferner bekannt, thermoplastischen Kunststoffen zur Verbesserung der Stabilität bei der Verarbeitung Thermostabilisatoren zuzusetzen. Zur Verbesserung der Verarbeitungseigenschaften eingesetzte Thermostabilisatoren sind beispielsweise Phosphite, gehinderte Phenole, aromatische, aliphatische oder gemischte Phosphine, Lactone, Thioether und gehinderte Amine (HALS).

Aus der WO-A 01/18101 sind Formmassen enthaltend einen thermoplastischen Kunststoff und einen Phthalo- oder Naphthalocyanin-Farbstoff bekannt, die zur Verbesserung der Verarbeitungsstabilität Antioxidantien wie Phosphite, gehinderte Phenole, aromatische, aliphatische oder gemischte Phosphine, Lactone, Thioether und gehinderte Amine enthalten können.

Der Erfindung liegt die Aufgabe zugrunde, wärmeabsorbierende Polymerzusammensetzungen bereitzustellen, die organischen Infrarotabsorber enthalten und bei Verwendung als Verscheibungsmaterial auch nach fortwährendem Einsatz unter Sonneneinstrahlung eine ausgezeichnete Transparenz, ein gutes Glanzverhalten und eine geringe Tendenz zur Vergilbung aufweisen. Insbesondere sollen sich die aus der Polymerzusammensetzung hergestellten Verscheibungselemente auch nach längerer thermischer Beanspruchung durch eine möglichst geringe Veränderung des Yellowness Index (Y.I.) auszeichnen.

Diese Aufgabe wird erfindungsgemäß durch eine Polymer-Zusammensetzung gelöst, die
(a) einen transparenten thermoplastischen Kunststoff,
(b) einen organischen Infrarotabsorber und
(c) eine Phosphinverbindung
enthält. Gegenstand der Erfindung sind ferner ein Verfahren zur Herstellung der erfindungsgemäßen Zusammensetzung sowie deren Verwendung und daraus hergestellte Erzeugnisse.

Überraschend wurde festgestellt, dass Polymerzusammensetzungen, die neben transparentem thermoplastischem Kunststoff und organischem Infrarotabsorber noch eine Phosphinverbindung enthalten, selbst nach lang andauernder thermischer Belastung nur eine geringe Tendenz zur Vergilbung aufweisen. So zeichnen sich aus den erfindungsgemäßen Zusammensetzungen hergestellte Verscheibungselemente selbst nach Thermolagerung bei 130°C über 1000 h durch eine Veränderung des Yellownes Indexes aus, die weniger als 10 % beträgt. Dies war deswegen überraschend, weil andere, als Thermostabilisatoren bekannte Substanzen wie Phosphite, gehinderte Phenole und gehinderte Amine ein deutlich schlechteres Verhalten zeigen.

Phosphinverbindungen im Sinne der Erfindung sind sämtliche organische Derivate von Phosphorwasserstoff (Phosphine) und Salze hiervon. Hinsichtlich der Auswahl der Phosphine liegen keine Beschränkungen vor, insbesondere sind sowohl aliphatische, als auch aromatische und gemischte Phosphine für den Einsatz in der erfindungsgemäßen Zusammensetzung geeignet. Die Phosphine können primäre, sekundäre und tertiäre Phosphine sein. Vorzugsweise werden tertiäre Phosphine eingesetzt. Vorzugsweise werden ferner aromatische Phosphine, noch bevorzugter tertiäre aromatische Phosphine, eingesetzt. Gemäß einer ganz besonders bevorzugten Ausführungsform der Erfindung wird Triphenylphosphin (TPP) oder ein Trinaphthylphosphin eingesetzt. Es können auch Mischungen aus verschiedenen Phosphinen eingesetzt werden.

Die Herstellung und Eigenschaften von Phosphinverbindungen sind dem Fachmann bekannt und beispielsweise in der EP-A 0 718 354 und "Ullmanns Enzyklopädie der Technischen Chemie", 4. Aufl., Bd. 18, S. 378-398 und Kirk-Othmer, 3. Aufl., Bd. 17, S. 527-534 beschrieben.

Hinsichtlich der Menge der in der Zusammensetzung enthaltenen Phosphinverbindungen liegen keine Beschränkungen vor. Vorzugsweise werden die Phosphine in einer Menge von 0,0001 bis 10 Gew.-%, insbesondere von 0,01 bis 0,2 Gew.-%, bezogen auf die Masse der Zusammensetzung, eingesetzt.

Organische Infrarotabsorber, die zum Einsatz in der erfindungsgemäßen Zusammensetzung geeignet sind, sind Verbindungen, welche zwischen 700 und 1500 nm (Nahes Infrarot = NIR) eine möglichst hohe Absorption aufweisen. Mindestens ein Absorptionsmaximum soll zwischen 700 nm und 1500 nm liegen und einen Extinktionskoeffizienten von 10³M⁻¹ cm⁻¹ bis 10⁷M⁻¹ cm⁻¹, bevorzugt >10⁴M⁻¹cm⁻¹ besitzen. Geeignet sind literaturbekannte Infrarot-Absorber, wie sie z.B. in M. Matsuoka, Infrared Absorbing Dyes, Plenum Press, New York, 1990 stoffklassenmäßig beschrieben sind. Besonders geeignet sind Infrarot-Absorber aus den Stoffklassen der Phthalocyanine, der Naphthalocyanine, der Metallkomplexe, der Azofarbstoffe, der Anthraquinone, der Quadratsäurederivate, der Immoniumfarbstoffe, der Perylene, der Quaterylene sowie der Polymethine. Davon sind ganz besonders Phthalocyanine und Naphthalocyanine geeignet. Aufgrund der verbesserten Löslichkeit in Thermoplasten sind Phthalocyanine und Naphthalocyanine mit sperrigen Seitengruppen vorzuziehen, wie beispielsweise Phenyl, Phenoxy, Alkylphenyl, Alkylphenoxy, tert-Butyl, (-S-Phenyl), -NH-Aryl, -NH-Alkyl und ähnliche Gruppen.

Es können auch Kombinationen von organischen NIR-Absorbern und anderen NIR-Schutzmitteln verwendet werden, wie z.B. anorganischen NIR-Absorbern. Dafür sind besonders dotierte Metalloxide geeignet wie Indiumoxid, das mit 2 bis 30 Atom%, vorzugsweise mit 4 bis 12 Atom% Zinn oder mit 10 bis 70 Atom% Fluor dotiert ist. Weiterhin ist besonders Zinnoxid geeignet, das mit 2 bis 60 Atom% Antimon oder mit 10 bis 70 Atom% Fluor dotiert ist. Ferner ist Zinkoxid besonders geeignet, das mit 1 bis 30 Atom%, vorzugsweise mit 2 bis 10 Atom% Aluminium oder mit 2 bis 30 Atom% Indium oder mit 2 bis 30 Atom% Gallium dotiert ist.

Hinsichtlich der Menge des in der Zusammensetzung enthaltenen organischen Infrarot-Absorbers liegen keine besonderen Beschränkungen vor. Als besonders vorteilhaft hat es sich erwiesen, wenn die Zusammensetzung organischen Infrarot-Absorber in einer Menge von 0,0001 bis 10 Gew.-%, insbesondere von 0,001 bis 0,05 Gew.-%, enthält. Besonders geeignet sind auch Mischungen von Infrarot-Absorbern. Der Fachmann kann mit Farbstoffen unterschiedlicher Wellenlängen der Absorptionsmaxima eine Optimierung der Absorption im nahen Infrarotbereich erreichen.

Als weiteren Bestandteil kann die erfindungsgemäße Zusammensetzung Ultraviolett-Absorber enthalten. Zum Einsatz in der erfindungsgemäßen Zusammensetzung geeignete Ultraviolett-Absorber sind Verbindungen, die eine möglichst geringe Transmission unterhalb 400 nm und eine möglichst hohe Transmission oberhalb von 400 nm besitzen. Derartige Verbindungen und deren Herstellung sind literaturbekannt und sind beispielsweise in den EP-A 0 839 623, WO-A 96/15102 und EP-A 0 500 496 beschrieben. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin® 234, Ciba Spezialitätenchemie, Basel), 2-(2'-Hydroxy-5'-(tert.-octyl)-phenyl)-benzotriazol (Tinuvin® 329, Ciba Spezialitätenchemie, Basel), 2-(2'-Hydroxy-3'-(2-butyl)-5'-(tert.butyl)-phenyl)-benzotriazol (Tinuvin® 350, Ciba Spezialitätenchemie, Basel), Bis-(3-(2H-benztriazolyl)-2-hydroxy-5-tert.-octyl)methan, (Tinuvin® 360, Ciba Spezialitätenchemie, Basel), 2-(Hydroxy-2-hydroxyphenyl)-4,6-diphenyl-1,3,5-triazin (Tinuvin® 1577, Ciba Spezialitätenchemie, Basel), sowie der Benzophenone 2,4-Dihydroxy-benzophenon (Chimasorb22®, Ciba Spezialitätenchemie, Basel) und 2-Hydroxy-4-(octyloxy)-benzophenon (Chimassorb 81, Ciba, Basel), 2-Propenoic acid, 2-cyano-3,3-diphenyl-, 2,2-bis[[(2-cyano-1-oxo-3,3-diphenyl-2-propenyl)oxy]-methyl]-1,3-propanediyl ester (9CI) (Uvinul® Uvinul 3030, BASF AG Ludwigshafen). Es können auch Mischungen dieser Ultraviolett-Absorber eingesetzt werden.

Hinsichtlich der Menge des in der Zusammensetzung enthaltenen Ultraviolett-Absorbers liegen keine besonderen Beschränkungen vor, solange die gewünschte Absorption von UV-Strahlung sowie eine ausreichende Transparenz des aus der Zusammensetzung hergestellten Formkörpers gewährleistet sind. Gemäß einer bevorzugten Ausführungsform der Erfindung enthält die Zusammensetzung Ultraviolett-Absorber in einer Menge von 0,05 bis 20 Gew.-%, insbesondere von 0,2 bis 10 Gew.-%.

Transparente thermoplastische Kunststoffe im Sinne der Erfindung sind z.B. Polymerisate von ethylenisch ungesättigten Monomeren und/oder Polykondensate von bifunktionellen reaktiven Verbindungen. Beispiele für transparente thermoplastische Polymere sind z.B. Polycarbonate oder Copolycarbonate auf Basis von Diphenolen, Poly- oder Copolyacrylate und Poly- oder Copolymethacrylat wie z.B. Poly- oder Copolymethylmethacrylate sowie Copolymere mit Styrol wie z.B. transparentes Polystyrolacrylnitril (PSAN) oder Polymere auf der Basis von Ethylen und/oder Propylen sowie aromatische Polyester wie PET, PEN oder PETG und transparente thermoplastische Polyurethane. Ferner können auch Polymere auf Basis von zyklischen Olefinen (z.B. TOPAS®, ein Handelsprodukt der Firma Ticona), Poly- oder Copolykondensate der Terephthalsäure wie z.B. Poly- oder Copolyethylenterephthalate (PET oder CoPET) oder PETG eingemischt werden.

Auch Mischungen von mehreren transparenten thermoplastischen Polymeren sind möglich.

Bevorzugt sind Polycarbonate oder Copolycarbonate.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Polycarbonate im Sinn der vorliegenden Erfindung sind sowohl Homopolycarbonate als auch Copolycarbonate; die Polycarbonate können in bekannter Weise linear oder verzweigt sein.

Die Herstellung der Polycarbonate erfolgt in bekannter Weise aus Diphenolen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, sowie deren kernalkylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hdydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate ist nur ein Diphenol eingesetzt, im Fall der Copolycarbonate sind mehrere Diphenole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind sowohl Monophenole als auch Monocarbonsäuren. Geeignete Monophenole sind Phenol selbst, Alkylphenole wie Kresole, p-tert.-Butylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol, 2,4,6-Trijodphenol, p-Jodphenol, sowie deren Mischungen.

Bevorzugte Kettenabbrecher sind Phenol und/oder p-tert.-Butylphenol.

Geeignete Monocarbonsäuren sind weiterhin Benzoesäure, Alkylbenzoesäuren und Halogenbenzoesäuren.

Bevorzugte Kettenabbrecher sind ferner die Phenole der Formel (I) 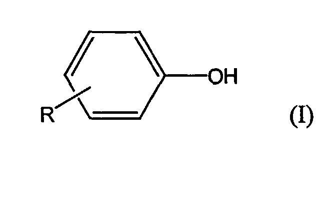 worin
- R: Wasserstoff oder ein C₁ bis C₃₀-Alkylrest, linear oder verzweigt ist, bevorzugt tert.-Butyl ist oder ein verzweigter oder unverzweigter C₈ und/oder C₉-Alkylrest ist.

Die Menge an einzusetzendem Kettenabbrecher beträgt bevorzugt 0,1 bis 5 Mol%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri(4-hydroxyphenyl)-heptan, 1,3,5-Tri(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenylisopropyl)-phenol, 2,6-Bis-(2-hydroxy-5'-methyl-benzyl)-4-methylphenol, 2-(4-hydroxyphenyl)-2-(2,4-dihydroxyphenyl)-propan, Hexa-(4(4-hydroxyphenylisopropyl)-phenyl)-orthoterephthalsäureester, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 bis 2 Mol%, bezogen wiederum auf Mole an jeweils eingesetzten Diphenolen.

Die Verzweiger können entweder mit den Diphenolen und den Kettenabbrechern in der wässrig alkalischen Phase vorgelegt werden, oder in einem organischen Lösungsmittel gelöst vor der Phosgenierung zugegeben werden. Im Fall des Umesterungsverfahrens werden die Verzweiger zusammen mit den Diphenolen eingesetzt.

Die erfindungsgemäßen Zusammensetzungen können ferner noch übliche Polymeradditive enthalten, wie z.B. die in EP-A 0 839 623, WO-A 96/15102 und EP-A 0 500 496 beschriebenen zusätzlichen Antioxidantien neben Phosphinen und Entformungsmittel, aber auch literaturbekannte Flammschutzmittel, Glasfasern, Füllstoffe, Schaummittel, Pigmente, optische Aufheller oder Farbstoffe, in den für die jeweiligen Thermoplasten üblichen Mengen. Bevorzugt sind Mengen von jeweils bis zu 5 Gew.-%, bevorzugt 0,01 bis 5 Gew.-%, bezogen auf die Menge der Zusammensetzungen, besonders bevorzugt 0,01 bis 1 Gew.-%, bezogen auf die Menge der Zusammensetzungen. Auch Mischungen mehrerer Zusatzstoffe sind geeignet.

Vorzugsweise betragen die als Verunreinigung vorhandenen Ionengehalte in den thermoplastischen Polycarbonaten weniger als 10 ppm, besonders bevorzugt weniger als 5 ppm.

Die Maßnahmen zur Herstellung der thermoplastischen Polycarbonate sind dem Fachmann geläufig.

Die Thermoplaste der erfindungsgemäßen Zusammensetzung können ferner übliche Entformungsmittel enthalten. Besonders geeignete Entformungsmittel sind Pentaerythrittetrastearat (PETS) oder Glycerinmonostearat (GMS).

Die Herstellung der erfindungsgemäßen Zusammensetzungen ist dem Fachmann bekannt und kann beispielsweise dadurch erfolgen, dass die Bestandteile der Zusammensetzung durch einen Extruder gemischt werden und der transparente thermoplastische Kunststoff während des Mischens aufgeschmolzen wird.

Die organischen Infrarot-Absorber, Phosphinverbindungen, Ultraviolett-Absorber und sonstigen Additive der erfindungsgemäßen Zusammensetzung können durch bekannte Verfahren wie Compoundierung, Einmischen in Lösung, Coextrusion, Kneten, Einmischen beim Spritzguss oder als Masterbatch eingebracht werden.

Die erfindungsgemäßen Zusammensetzungen eignen sich zur Herstellung von Erzeugnissen oder Formkörpern, insbesondere zur Herstellung von transparenten Kunststoffverscheibungselementen wie z.B. Kunststoffverscheibungselementen auf Basis von Polycarbonat und/oder Copolycarbonat. Gegenstand der Erfindung sind daher auch Erzeugnisse oder Formkörper, die die erfindungsgemäße Zusammensetzung enthalten oder aus dieser bestehen.

Die erfindungsgemäßen Zusammensetzungen können nach den üblichen Verfahren wie Heißpressen, Spinnen, Extrudieren oder Spritzgießen in Erzeugnisse oder Formkörper, d.h. geformte Gegenstände wie Spielzeugteile, Fasern, Folien, Bändchen, Platten, Stegplatten, Gefäße, Rohre oder sonstige Profile, überführt werden. Von Interesse ist auch die Verwendung von Mehrschichtsystemen. Das Aufbringen kann zugleich oder unmittelbar nach der Formgebung des Grundkörpers geschehen, z.B. durch Coextrusion oder Mehrkomponentenspritzguss. Das Aufbringen kann aber auch auf den fertig geformten Grundkörper geschehen, z.B. durch Lamination mit einem Film oder durch Beschichtung mit einer Lösung.

Die erfindungsgemäßen Zusammensetzungen können zu Erzeugnissen oder Formkörpern verarbeitet werden, in dem man beispielsweise die Zusammensetzungen zu Granulat extrudiert und dieses Granulat, gegebenenfalls nach Zusatz der oben genannten Additive, durch Spritzguss oder Extrusion zu verschiedenen Erzeugnissen oder Formkörpern in bekannter Weise verarbeitet.

Erfindungsgemäß bevorzugte Erzeugnisse oder Formkörper sind Platten, Folien, Verscheibungen, beispielsweise Autofenster, Autosonnendächer, Bedachungen oder Gebäudeverglasungen, die die erfindungsgemäßen Zusammensetzungen enthalten. Als weitere Komponenten der erfindungsgemäßen Erzeugnisse neben den erfindungsgemäßen Zusammensetzungen können beispielsweise weitere Werkstoffteile in den erfindungsgemäßen Erzeugnissen enthalten sein. Beispielsweise können Verscheibungen Dichtungsmaterialen am Rand der Verscheibungen aufweisen. Bedachungen können beispielsweise Metallkomponenten wie Schrauben oder ähnliches aufweisen, die zur Befestigung der Bedachungselemente dienen können.

Die erfindungsgemäßen Zusammensetzungen sind als transparente Erzeugnisse universell einsetzbar, wo Wärmedurchlässigkeit unerwünscht ist. Besonders geeignet ist die Anwendung bei Automobilkomponenten, wie z.B. Verscheibungselemente, Autodachfenster, Kunststoffstreuscheiben und architektonischen Anwendungen wie Gebäudeverglasung, Gewächshauskomponenten, Bushaltestellen oder ähnliche Anwendungen. Dabei können auch Doppelstegplatten oder Multistegplatten verwendete werden. Ferner ist die Anwendung bei Spritzgussteilen wie Lebensmittelbehältern, Bestandteilen von Elektrogeräten und in Brillengläsern, z.B. auch für Schutzbrillen wie Schweißerschutzbrillen, möglich.

### Beispiele

Im folgenden wird die Erfindung anhand von Ausführungsbeispielen näher beschrieben.

### Beispiel 1

Zur Herstellung der Probekörper wurden additivfreie Polycarbonate Makrolon® 2808 (lineares Bisphenol-A Polycarbonat der Bayer AG, Leverkusen, mit einem Schmelzflussindex (MFR) von 10 g/10 min bei 300°C und 1,2 kg Belastung) und Makrolon® 2408 (lineares Bisphenol-A Polycarbonat der Bayer AG, Leverkusen, mit einem Schmelzflussindex (MFR) von 20 g/10 min bei 300°C und 1,2 kg Belastung) auf einem Zweiwellenextruder mit der in Tabelle 1 angegebenen Menge Additiv compoundiert und anschließend granuliert. Aus diesem Granulat wurden anschließend Farbmusterplatten abgespritzt (60 mm x 40 mm x 2 mm).

Als IR-Absorber wurde Bis-4-dimethylaminodithiobenzil)-nickel (BDN) von Acros Organics, Fisher Scientific GmbH, 58239 Schwerte, Deutschland, eingesetzt.

Als Thermostabilisatoren wurden folgende Verbindungen eingesetzt:
T1: Triphenylphosphin (Sigma-Aldrich, 82018 Taufkirchen, Deutschland)
T2: Octadecyl-3-(3',5'-di-tert-butyl-4'-hydroxyphenyl)-propionat (Irganox® 1076 der Ciba Specialty Chemicals, Basel, Schweiz)
T3: Tris(2,4-di-tert-butyl-phenyl)-phosphit (Irgafos® 168 der Ciba Specialty Chemicals, Basel, Schweiz).
T4: Tinuvin 765 (Bis(1,2,2,6,6-pentamethyl-4-piperidyl)decanedioate) (Ciba Specialty Chemicals, Basel, Schweiz)

**Tabelle 1**

| Zusammensetzung der Proben | | | | | |
|---|---|---|---|---|---|
| **Zusammensetzung (Gew.-%)** | **1** | **V2** | **V3** | **V4** | **V5** |
| | | | | | |
| Polycarbonat (Makrolon® 2808) | 90,0000 | 90,0000 | 90,0000 | 99,6930 | 90,0000 |
| Polycarbonat (Makrolon® 2408) | 9,8925 | 9,6925 | 9,6925 | - | 9,9925 |
| | | | | | |
| IR-Absorber | 0,0075 | 0,0075 | 0,0075 | 0,0075 | 0,0075 |
| | | | | | |
| Thermostabilisator T1 | 0,1000 | | | | |
| Thermostabilisator T2 | | 0,3000 | | | |
| Thermostabilisator T3 | | | 0,3000 | | |
| Thermostabilisator T4 | | | | 0,3000 | |

### Beispiel 2

Der Yellowness-Index (YI) der Farbmusterplättchen aus den Zusammensetzungen 1, V2, V3, V4 und V5 wurde vor und nach Thermolagerung bei 130°C über 1000 h gemäß ASTM E313 gemessen. Aus den gemessenen Werten wurde die prozentuale Veränderung des Y.I. nach Thermolagerung über 1000 h bei 130°C berechnet. Die Ergebnisse sind in Tabelle 2 dargestellt.

**Tabelle 2**

| Veränderung des Yellowness Indexes (YI) nach Thermolagerung | |
|---|---|
| **Probe** | **\|ΔYI\| nach 1000h** **Thermolagerung bei 130°C [%]** |
| | |
| 1 | 2,8 |
| V2 | 15 |
| V3 | 14,3 |
| V4 | 30,8 |
| V5 | 17,9 |
| | |

Die aus der erfindungsgemäßen Zusammensetzung hergestellte Probe 1 wies mit |ΔYI| von 2,8 % eine deutlich geringere Veränderung des YI nach 1000 h Thermolagerung bei 130°C auf, als die Vergleichsproben V2 bis V5. Die Ergebnisse zeigen, dass die aus der erfindungsgemäßen Zusammensetzung hergestellten Probe selbst nach Thermolagerung über 1000 h eine hohe Farbechtheit und geringe Vergilbung aufweist.

## Patentansprüche

1. Polymer-Zusammensetzung enthaltend
(a) einen transparenten thermoplastischen Kunststoff,
(b) einen organischen Infrarotabsorber und
(c) eine Phosphinverbindung.

2. Zusammensetzung nach Anspruch 1, **dadurch gekennzeichnet, dass** die Phosphinverbindung Triphenylphosphin oder ein Derivat von Triphenylphosphin ist.

3. Zusammensetzung nach einem der vorhergehenden Ansprüche, **dadurch gekennzeichnet, dass** die Phosphinverbindung in einer Menge von 0,01 bis 0,2 Gew.-%, bezogen auf die Masse der Zusammensetzung, enthalten ist.

4. Zusammensetzung nach einem der vorhergehenden Ansprüche, **dadurch gekennzeichnet, dass** der Infrarotabsorber in einer Menge von 0,001 bis 0,05 Gew.-%, bezogen auf die Masse der Zusammensetzung, enthalten ist.

5. Zusammensetzung nach einem der vorhergehenden Ansprüche, **dadurch gekennzeichnet, dass** als Kunststoff ein Polycarbonat oder ein Copolycarbonat eingesetzt wird.

6. Zusammensetzung nach einem der vorhergehenden Ansprüche, **dadurch gekennzeichnet, dass** die Zusammensetzung als weiteren Bestandteil Ultraviolett-Absorber enthält.

7. Zusammensetzung nach Anspruch 6, **dadurch gekennzeichnet, dass** der Ultraviolett-Absorber ausgewählt ist aus der Gruppe der Benzotriazole, Triazine, Benzophenone und arylierten Cyanoacrylate.

8. Zusammensetzung nach Anspruch 6 oder 7, **dadurch gekennzeichnet, dass** die Zusammensetzung Ultraviolett-Absorber in einer Menge von 0,2 bis 10 Gew.-%, bezogen auf die Masse der Zusammensetzung, enthält.

9. Verfahren zur Herstellung einer Zusammensetzung nach einem der Ansprüche 1 bis 8, wobei die Bestandteile der Zusammensetzung durch einen Extruder gemischt werden und der transparente thermoplastische Kunststoff während des Mischens aufgeschmolzen wird.

10. Formkörper, enthaltend eine Zusammensetzung gemäß einem der Ansprüche 1 bis 8.

11. Formkörper nach Anspruch 9, **dadurch gekennzeichnet, dass** der Formkörper ein transparentes Kunststoffverscheibungselement, insbesondere ein transparentes Kunststoffverscheibungselement auf Basis von Polycarbonat und/oder Copolycarbonat ist.

12. Platten, Folien oder Verscheibungen, enthaltend eine Zusammensetzung gemäß einem der Ansprüche 1 bis 8.

13. Verwendung einer Zusammensetzung gemäß einem der Ansprüche 1 bis 8 zur Herstellung von Verscheibungen.
